(19) Europäisches Patentamt
European Patent Office
Office européen des brevets

(11) Veröffentlichungsnummer : **0 065 717**
**B1**

(12) # EUROPÄISCHE PATENTSCHRIFT

(45) Veröffentlichungstag der Patentschrift : **03.04.85**

(51) Int. Cl.⁴ : **C 09 B 26/04**

(21) Anmeldenummer : **82104217.3**

(22) Anmeldetag : **14.05.82**

(54) **Verfahren zur Herstellung kationischer Hydrazonfarbstoffe.**

(30) Priorität : **26.05.81 DE 3120991**

(43) Veröffentlichungstag der Anmeldung : **01.12.82 Patentblatt 82/48**

(45) Bekanntmachung des Hinweises auf die Patenterteilung : **03.04.85 Patentblatt 85/14**

(84) Benannte Vertragsstaaten : **CH DE FR GB LI**

(56) Entgegenhaltungen :
**EP-A- 0 008 323**
**FR-A- 2 164 645**
**FR-A- 2 311 064**
**FR-E- 78 569**
**US-A- 2 749 351**
**CHEMICAL ABSTRACTS, Band 88, Nr. 17, 24. April 1978, Seite 539, Nr. 121089m, Columbus, Ohio, USA H. YAMANAKA et al.: "Studies on pyrimidine derivatives. II. Reaction of some dimethyl- and trimethylheteroaromatics with ethyl nitrite"**
**CHEMISCHE BERICHTE, Band 90, Nr. 12, 1957, Verlag Chemie, Seiten 2792-2800, Weinheim, DE.**

(73) Patentinhaber : **BAYER AG**
**Konzernverwaltung RP Patentabteilung**
**D-5090 Leverkusen 1 Bayerwerk (DE)**

(72) Erfinder : **Giesecke, Heinz, Dr.**
**Am Hang 19**
**D-5090 Leverkusen 3 (DE)**

**EP 0 065 717 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es wurde gefunden, daß man in vorteilhafter Weise zu bekannten Farbstoffen der allgemeinen Formel

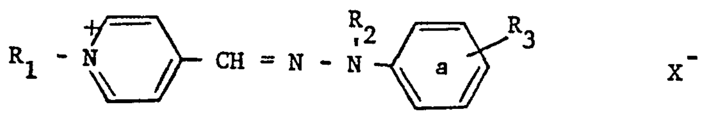 (I)

worin

$R_1$ Alkyl, Alkenyl, Aralkyl oder Cycloalkyl,

$R_2$ Wasserstoff, Alkyl, Alkenyl, Aryl, Aralkyl, Cycloalkyl oder mit Ring a verbundenes Alkylen,

$R_3$ Wasserstoff oder einen oder mehrere in der Farbstoffchemie übliche nichtionische Substituenten und

$X^-$ ein Anion bedeuten,

worin am Ring a ein aromatischer oder cycloaliphatischer Ring annelliert sein kann, und worin die genannten Reste in der Farbstoffchemie übliche nichtionische Substituenten tragen können, gelangt, wenn man 4-Methyl-pyridin in Gegenwart oder Abwesenheit eines inerten Lösungsmittels mit einem Quaternierungsmittel der Formel

$$R_1—X \quad (II)$$

wobei

$R_1$ die oben angegebene Bedeutung hat und

X eine als Anion $X^-$ abspaltbare Gruppe bedeutet,

in einem Temperaturbereich von – 20 °C bis zum Siedepunkt des Systems, vorzugsweise zwischen Raumtemperatur und Siedepunkt, behandelt, das entstehende Reaktionsprodukt gegebenenfalls ohne Zwischenisolierung mit einer Base und einem Nitrit der Formel

$$R—O—N = O \quad (III)$$

wobei R einen organischen Rest bedeutet, in einem Temperaturbereich von – 20 °C bis + 60 °C, vorzugsweise bei 0 °C bis + 20 °C, umsetzt, anschließend bei einem pH-Wert unterhalb von 7, vorzugsweise unterhalb von 5 mit einem Hydrazin der Formel

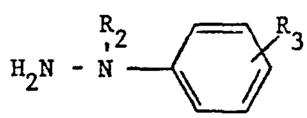 (IV)

wobei $R_2$ und $R_3$ die oben angegebene Bedeutung haben, oder einem Hydrazosulfonat der Formel

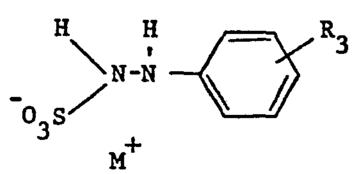 oder 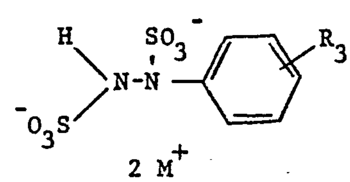 (Vb)

wobei

$M^+$ ein einwertiges Metall- oder organisch substituiertes Ammoniumkation oder ein Äquivalent eines zweiwertigen Kations darstellt, und

$R_3$ die oben angegebene Bedeutung hat,

in einem Temperaturbereich von – 20 °C bis zur Siedetemperatur des Systems, vorzugsweise bei Raumtemperatur bis zur Siedetemperatur, umsetzt, und gegebenenfalls, wenn $R_2$ zunächst Wasserstoff ist und im Endprodukt verschieden von Wasserstoff sein soll, in einer an sich bekannten Weise mit einer Verbindung der Formel

$$R_2—X \quad (VI)$$

worin

X die oben angegebene Bedeutung hat und

$R_2$ Alkyl, Alkenyl oder Aralkyl bedeutet, umsetzt.

Bevorzugt herstellbare Farbstoffe haben die Formel

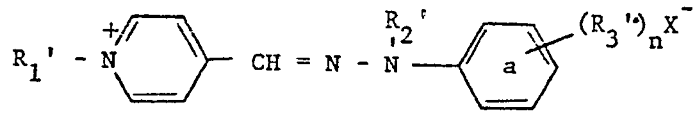

(VII)

worin

$R_1'$ $C_1$- bis $C_4$-Alkyl, $C_3$- bis $C_4$-Alkenyl, Phenyl-$C_1$- bis $C_3$-alkyl, Cyclopentyl oder Cyclohexyl,

$R_2'$ Wasserstoff, $c_1$- bis $C_4$-Alkyl, $C_3$- bis $C_4$-Alkenyl, Phenyl, Phenyl-$C_1$- bis $C_3$-alkyl, Cyclopentyl, Cyclohexyl oder mit Ring a verbundenes $C_2$- oder $C_3$-Alkylen oder Cyclohexylen,

$R_3'$ $C_1$- bis $C_4$-Alkyl, $C_1$- bis $C_4$-Alkoxy, Hydroxy, Chlor, Brom, Nitro, Amino, Mono- oder Di-$C_1$- bis $C_4$-alkylamino, Aminosulfonyl, Carbonamid, Cyan, Carbonsäure-$C_1$- bis $C_4$-alkylester, Phenylazo oder Methylendioxy,

n 0, 1, 2 oder 3 und

$X^-$ ein Anion bedeuten,

worin die cyclischen und acyclischen durch $C_1$- bis $C_4$-Alkoxy, Hydroxy, fluor, Chlor, Brom, Amino, Mono- oder Di-$C_1$- bis $C_4$-alkyl-amino, Aminosulfonyl, Carbonamid, Cyan oder Carbonsäure-$C_1$- bis $C_4$-alkylester und die cyclischen Reste außerdem durch $C_1$- bis $C_4$-Alkyl substituiert sein können und an Ring a ein Benzol-, Cyclohexyl- oder Cyclopentylring annelliert sein kann.

R steht vorzugsweise für einen $C_1$- bis $C_5$-Alkylrest, insbesondere für Methyl oder Ethyl.

Bevorzugte gegebenenfalls substituierte $C_1$- bis $C_4$-Alkylreste $R_1'$ und $R_2'$ sind der Methyl-, Ethyl-, n- und Isopropyl-, n- und Isobutyl-Rest und ihre durch Carbonsäuremethyl- oder -ethylester, carbonsäureamid, Cyan, Methoxy, Ethoxy, Hydroxy, Chlor oder Brom substituierten Derivate, vorzugsweise unsubstituiertes Alkyl, insbesondere Methyl und Ethyl.

Unter gegebenenfalls substituierten Phenyl-$C_1$- bis $C_3$-alkyl-Resten $R_1'$ und $R_2'$ sind vorzugsweise der Benzyl, α- oder β-Phenylethyl- bzw. α-, β- oder γ-Phenylpropyl-Rest zu verstehen, die im Ring durch Methyl, Ethyl, Chlor, Brom, Methoxy, Ethoxy, Hydroxy, Cyan, Carbonamid oder Carbonsäuremethyl- oder ethylestergruppen substituiert sein können. Bevorzugt sind die unsubstituierten Reste und hier wiederum die Benzylreste.

Unter gegebenenfalls substituierten $C_3$- bis $C_4$-Alkenylresten $R_1'$ und $R_2'$ sind vorzugsweise der Allyl-, But-1-en-4-yl-, But-2-en-1-yl- und 2-Methyl-allyl-Rest zu verstehen, die durch Chlor, Brom, Methoxy, Ethoxy, Hydroxy, Cyan, Carbonamid oder Carbonsäuremethyl- oder -ethylester substituiert sein können.

Unter gegebenenfalls substituierten Cycloalkylresten $R_1'$ und $R_2'$ sind vorzugsweise der Cyclopentyl- oder Cyclohexyl-Rest zu verstehen, die durch $C_1$- bis $C_4$-Alkylgruppen substituiert sein können. Als Beispiel kann der 4-Methyl-cyclohex-1-yl-Rest angesehen werden.

Unter einem gegebenenfalls substituierten Phenylrest $R_2'$ sind vorzugsweise der Phenylrest und seine durch Fluor, Chlor, Brom, Methoxy, Ethoxy, Hydroxy, Cyan, Carbonamid oder Carbonsäuremethyl- oder -ethylester substituierten Derivate zu verstehen. Bevorzugt ist der Phenyl-Rest.

Unter gegebenenfalls substituiertem, mit dem Phenylring a verbundenen $C_2$- oder $C_3$-Alkylen oder Cyclohexylen sind insbesondere der Ethan-1,2-diyl-, Propan-1,3-diyl- oder Cyclohexan-1,2-diylrest zu verstehen, die durch $C_1$- bis $C_4$-Alkylgruppen substituiert sein können.

Bevorzugte Alkylenreste $R_2$ sind der Ethan-1,2-diyl-, Propan-2,3-diyl-, Propan-1,3-diyl- und 2-Methylpentan-2,4-diyl-Rest.

In bevorzugt herstellbaren Farbstoffen stehen

$R_1$ bzw. $R_1'$ für Methyl, Ethyl oder Benzyl,

$R_2$ bzw. $R_2'$ für Wasserstoff, Methyl oder 2-Methylethylen und

$R_3$ bzw. $R_3'$ für Wasserstoff, Methyl, Methoxy, Ethoxy, Chlor, Nitro oder Sulfonamid.

Insbesondere stehen

$R_1$ bzw. $R_1'$ für Methyl und

$R_2$ und $R_3$ bzw.

$R_2'$ und $R_3'$ für Wasserstoff.

Als Lösungsmittel für die Umsetzung mit den Verbindungen II werden bevorzugt mit Wasser nicht mischbare Lösungsmittel wie Benzol, Chlorbenzol, Toluol oder Xylol verwendet.

Als Base für die Reaktion mit den Nitriten III werden vorzugsweise Alkali- oder Erdalkalihydroxid, Erdalkalioxid oder ein organisches Ammoniumhydroxid, insbesondere Natrium- oder Kaliumhydroxid verwendet.

Eine bevorzugte Ausführungsform des erfindungsgemäßen Verfahrens besteht darin, zwei Reaktionsstufen, insbesondere alle Stufen mit Ausnahme der eventuellen Umsetzung mit Verbindung (IV), ohne Zwischenisolierung als Eintopfverfahren durchzuführen.

Das Verfahren weist gegenüber den Verfahren des Standes der Technik mehrere bedeutende Vorteile auf.

Aus der Deutschen Patentschrift 1 133 054 ist ein Verfahren zur Herstellung von basischen Farbstoffen bekannt, das dadurch gekennzeichnet ist, daß man Pyridin-4-aldehyd mit Arylhydrazinen kondensiert und anschließend das Reaktionsprodukt am Pyridin-Stickstoff alkyliert oder das aus alkyliertem γ-Picolin und p-Nitroso-di-methylanilin zugängliche Azomethin mit Arylhydrazinen umsetzt. Nachteil dieses Verfahrens ist die schlechte Zugänglichkeit der Ausgangsverbindungen. So ist Pyridin-4-aldehyd ein teures Handelsprodukt, und das Azomethin aus quaterniertem γ-Picolin und p-Nitroso-dimethylanilin läßt sich nicht mit guten Ausbeuten herstellen.

So erhält man nach F. Kröhnke et al., Chem. Ber. *90*, 2792-2800 (1957), aus einem äquimolaren Gemisch von N-Methyl-γ-picoliniumjodid und p-Nitroso-dimethylanilin unter Piperidinkatalyse bei 80 °C nur eine Ausbeute an diesem Produkt von etwa 37 % der Theorie. Des weiteren spalten Verbindungen dieses Typs bei der Kondensation mit Hydrazinen notwendigerweise pro mol Einsatz 1 mol p-Aminodialkylanilin ab, das als wertloses Zwangsanfallprodukt vernichtet werden muß. Außerdem muß nach dem in der Deutschen Patentschrift 1 133 054 beschriebenen Verfahren eine Zwischenisolierung vorgenommen werden, die bei dem hier beschriebenen Verfahren wegfallen kann.

In der Europäischen Patentanmeldung 8 323 wird ein Verfahren zur Herstellung von Pyridinaldehydhydrazonen beschrieben, die teilweise durch Quaternierung in die Farbstoffe der Formel I überführt werden können. Die Herstellung der Hydrazone erfolgt durch Kondensation von Aminomethyl-pyridin mit Aldehyden oder Ketonen, anschließende Isomerisierung der Azomethin-Doppelbindung und Weiterkondensation mit Hydrazinen. Der Nachteil dieses Verfahrens ist, daß als Ausgangsmaterial 4-Aminomethyl-pyridin eingesetzt werden muß, dessen Herstellung nach literaturbekannten Methoden teuer ist. Ein weiterer Nachteil des Verfahrens ist der Zwangsanfall organischer Amine, die nicht sinnvoll weiterverwendet werden können.

Das neue Verfahren überwindet die Nachteile der bekannten Verfahren zur Herstellung von Verbindungen der Formel I, indem es

1. von preiswertem γ-Picolin ausgeht,
2. in einem Schritt die Oxidationsstufe des Aldehyds in hoher Ausbeute erreicht,
3. Zwischenisolierungen vermeiden kann.

Beispiel 1

Man legt 48,0 g γ-Picolin vor, tropft bei 85-90 °C 65,0 g Dimethylsulfat zu und rührt 1 h bei dieser Temperatur nach. Dann versetzt man mit 75,0 g Wasser und fügt bei 40 °C 100 g Methanol zu. Nach Abkühlen auf 0-5 °C tropft man bei dieser Temperatur eine Mischung aus 40 g Natriumhydroxid, 60 g Wasser und 40 g Methanol zu. Anschließend leitet man unter intensivem Rühren 47,0 g gasförmiges Methylnitrit so ein, daß möglichst alles aufgenommen wird. Man rührt 1 h bei 0-5 °C nach und tropft dann 96 g konzentrierte Salzsäure unterhalb 10 °C ein. Nach Zufügen von 150 g Wasser destilliert man 180 g Flüssigkeit aus dem Ansatz ab. Danach versetzt man bei 80 °C den Destillationsrückstand mit 54,0 g Phenylhydrazin und stellt den pH-Wert mit konzentrierter Salzsäure auf 0,7 zurück. Nach 8-stündigem Rühren bie 80 °C läßt man auf 30 °C abkühlen. Man stellt den Ansatz mit konzentrierter Natronlauge auf pH 7 und läßt noch 3 h bei 0-5 °C rühren. Nach Absaugen, gutem Abpressen und Vakuumtrocknung bei 50 °C erhält man den Farbstoff der Formel

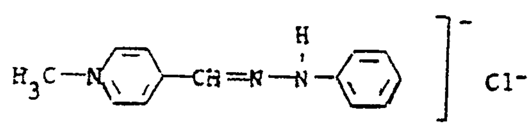

in einer Ausbeute von 75 % der Theorie, bezogen auf eingesetztes γ-Picolin.

Dieses Produkt läßt sich folgendermaßen weiter umsetzen :

Man trägt den Feststoff in 820 g Wasser von 20-25 °C ein und läßt ca. 1 h lang rühren. Dann filtriert man und versetzt das klare Filtrat mit 75,4 g Benzolsulfonsäuremethylester. Nach Zugabe von 77,8 g 30 %iger Natronlauge rührt man den Ansatz 5 h lang bei 20-25 °C. Man stellt den pH-Wert mit konzentrierter Salzsäure auf 4 und erhitzt 2 h lang auf 80 °C, wobei der pH-Wert gegebenenfalls korrigiert wird.

Nach Abkühlen auf 30 °C engt man den Ansatz bei einer Badtemperatur von 60 °C im Vakuum zur Trockne ein und trocknet anschließend das erhaltene feste Produkt über Nacht bei 50 °C im Vakuum nach.

Man erhält in quantitativer Ausbeute den Farbstoff der Formel

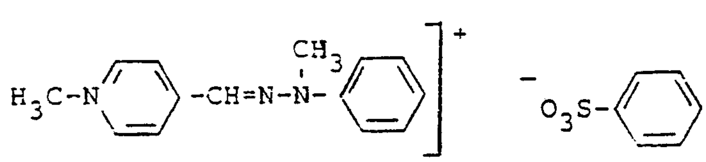

im Gemisch mit farblosen Salzen.

Er färbt Polyacrylnitril in einem klaren, lichtechten, grünstichigen Gelb mit sehr guten Egalisiereigenschaften.

Beispiel 1a

Man legt 48,0 g γ-Picolin vor und heizt bei einer Badtemperatur von 160 °C zum Sieden. Nach Zutropfen von 68,5 g 1-Brom-butan hält man noch 1,5 h diese Badtemperatur und verfährt dann weiter wie bei Beispiel 1, Satz 2. Man isoliert nach Ausführung der im Beispiel 1 beschriebenen Operationen den gelben Farbstoff mit dem farbtragenden Kation der Formel

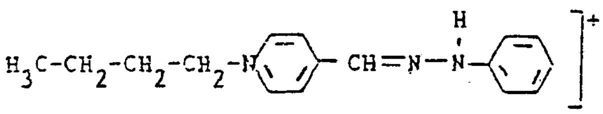

in ähnlich guter Ausbeute, wie in Beispiel 1 beschrieben.

Beispiel 1b

Man legt 48,0 g γ-Picolin vor und erwärmt auf 85-90 °C. Dann entfernt man die Heizung und tropft insgesamt 77,1 g Diethylsulfat so zu, daß die Temperatur weiter zwischen 85 und 90 °C gehalten wird. Danach wird noch 1 h bei 90 °C nachgerührt und anschließend weiterverfahren wie bei Beispiel 1, Satz 2. Nach Ausführung der im Beispiel 1 beschriebenen Operationen erhält man in guter Ausbeute den gelben Farbstoff mit dem farbgebenden Kation der Formel

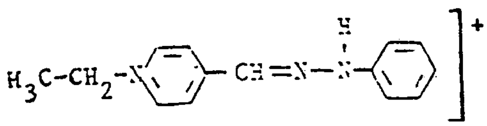

Beispiel 1c

Man legt 48,0 g γ-Picolin, gelöst in 130 g Chlorbenzol, vor und erhitzt das Gemisch zum Rückfluß. Bei dieser Temperatur tropft man innerhalb 0,5 h 63,3 g Benzylchlorid zu und rührt noch 2 h unter Rückfluß nach. Dann gibt man 200 g Wasser zu und destilliert das Chlorbenzol mit Wasserdampf ab. Anschließend konzentriert man durch Abdestillieren von Wasser so weit auf, daß das Gewicht des Ansatzes 186 g entspricht. Man fügt 100 g Methanol zu und verfährt dann weiter wie bei Beispiel 1, Satz 3. Nach Ausführung der in Beispiel 1 beschriebenen Operationen erhält man den gelben Farbstoff mit dem farbtragenden Kation der Formel

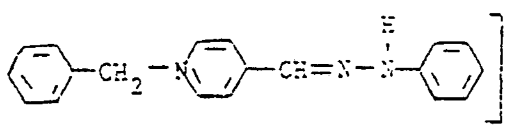

Beispiel 2

Man verfährt zunächst wie bei Beispiel 1. Nach dem Abdestillieren der 180 g Flüssigkeit gibt man 112 g 4-Hydrazobenzolsulfonamid-hydrochlorid zu und stellt den pH-Wert mit konzentrierter Salzsäure auf 0,5. Man erhitzt unter Rühren 8 h lang auf 80 °C. Nach dem Abkühlen stellt man den pH-Wert mit konzentrierter Natronlauge auf 7. Nach 3-stündigem Rühren bei 0-5 °C saugt man ab und erhält nach Trocknen bei 50 °C im Vakuum in sehr guter Ausbeute den Farbstoff der Formel

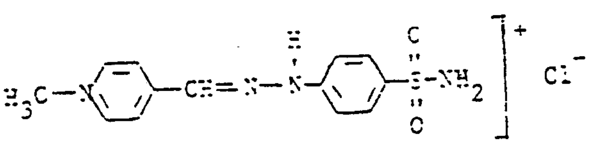

Verfährt man anfangs nach Beispiel 1a, 1b oder 1c und dann sinngemäß nach Beispiel 2, so erhält man die am Pyridin-Stickstoff entsprechend anders substituierten Derivate in ebenfalls guten Ausbeuten.

Beispiel 3

Man verfährt zunächst wie bei Beispiel 1. Nach dem Einleiten des Methylnitrits, Nachrühren und Eintropfen der 96 g konzentrierten Salzsäure engt man den Reaktionsansatz im Wasserstrahlvakuum bei

einer Badtemperatur von 60 °C so lange ein, bis nichts mehr übergeht. Dann fügt man 370 g Wasser und 215 g konzentrierte Salzsäure zu und versetzt das Gemisch mit 119 g des Natriumsalzes der N-(4-Methoxyphenyl)-hydrazin-N'-sulfonsäure. Nach insgesamt 24-stündigem Rühren bei 20-25 °C saugt man ab und trocknet den roten, feinkristallinen Feststoff der Formel

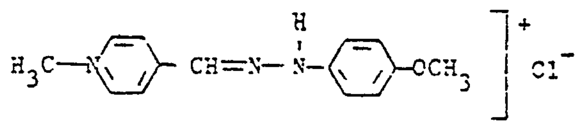

bei 50 °C im Vakuum.

Verfährt man anfangs nach Beispiel 1a, 1b oder 1c und dann sinngemäß nach Beispiel 3, so erhält man die am Pyridin-Stickstoff entsprechend anders substituierten Derivate in ähnlichen Ausbeuten.

## Beispiel 4

Man verfährt zunächst wie bei Beispiel 1. Nach dem Abdestillieren der 180 g Flüssigkeit gibt man 94,8 g 3-Nitro-phenylhydrazin-hydrochlorid zu und stellt den pH-Wert mit konzentrierter Salzsäure auf 0,7 zurück. Nach 8-stündigem Rühren bei 80 °C kühlt man bis auf 5 °C ab, hält 1 h lang bei dieser Temperatur und saugt den auskristallisierten Farbstoff der Formel

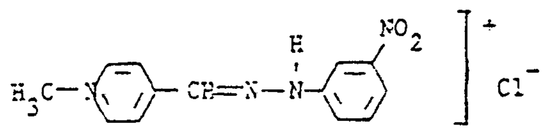

ab. Er kann im Vakuum bei 50 °C getrocknet werden.

Verfährt man anfangs nach Beispiel 1a, 1b oder 1c und dann sinngemäß nach Beispiel 4, so erhält man die am Pyridin-Stickstoff entsprechend anders substituierten Derivate in guten Ausbeuten.

## Beispiel 5

Man verfährt zunächst wie bei Beispiel 1. Nach dem Abdestillieren der 180 g Flüssigkeit versetzt man den Destillationsrückstand mit 81,8 g 4-Chlor-phenylhydrazin-sulfat. Man stellt den pH-Wert mit konzentrierter Salzsäure auf 0,6 zurück und rührt 6 h lang bei 80 °C. Nach dem Abkühlen auf 0-5 °C und 3-stündigem Rühren bei dieser Temperatur saugt man ab und erhält nach Trocknen im Vakuum bei 50 °C in guter Ausbeute den Farbstoff der Formel

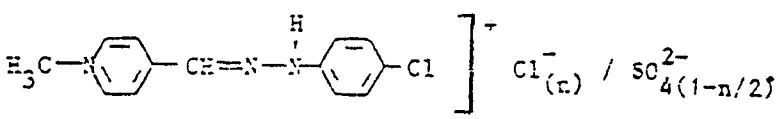

$0 < n < 1$

Verfährt man anfangs nach Beispiel 1a, 1b oder 1c und dann sinngemäß nach Beispiel 5, so erhält man die am Pyridin-Stickstoff entsprechend anders substituierten Derivate in ähnlich guten Ausbeuten.

## Beispiel 6

Man verfährt zunächst wie bei Beispiel 1. Nach dem Abdestillieren der 180 g Flüssigkeit fügt man 101 g 2-Nitro-phenylhydrazin-sulfat zu und stellt den pH-Wert mit konzentrierter Salzsäure auf 0,6 zurück. Nach 5-stündigem Rühren bei 90 °C kühlt man bis auf 20-25 °C ab, verdünnt den Reaktionsansatz mit der gleichen Menge Wasser und tropft anschließend 80 g 50 %ige wäßrige Zinkchloridlösung zu. Nach 3-stündigem Rühren bei 0-5 °C saugt man ab und isoliert so den Farbstoff der Formel

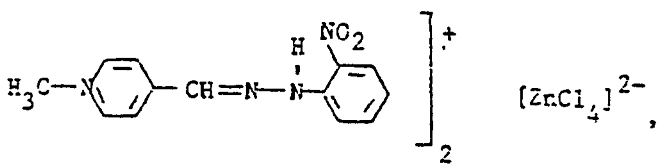

der bei 50 °C im Vakuum getrocknet werden kann, in einer Ausbeute ähnlich der des Beispiels 1.

Verfährt man anfangs nach Beispiel 1a, 1b oder 1c und dann sinngemäß nach Beispiel 6, so erhält

man die am Pyridin-Stickstoff entsprechend anders substituierten Derivate in ebenfalls guten Ausbeuten.

Gewünschtenfalls läßt sich der wasserstofftragende Hydrazonstickstoff der Farbstoffe der Beispiele 2-6 wie in Beispiel 1 beschrieben mit ebenfalls guten Ausbeuten nachalkylieren.

Beispiel 7

Man verfährt zunächst wie bei Beispiel 1. Nach Abdestillieren der 180 g Flüssigkeit gibt man 93 g 1-Amino-2-methyl-indolin-hydrochlorid zu und stellt den pH-Wert mit konzentrierter Salzsäure auf 0,6 zurück. Nach 8-stündigem Rühren bei 80 °C fügt man 700 g Wasser zu und tropft dann 80 g einer 50 %igen wäßrigen Zinkchloridlösung zu. Nach 1-stündigem Nachrühren saugt man ab und trocknet im Vakuum bei 50 °C. Man erhält einen rotstichig gelben Farbstoff, dessen Kation durch die folgende Formel wiedergegeben wird :

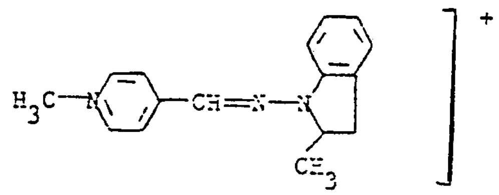

Verfährt man anfangs nach Beispiel 1a, 1b oder 1c und dann sinngemäß nach Beispiel 7, so erhält man die am Pyridin-Stickstoff entsprechend anders substituierten Derivate.

**Ansprüche**

1. Verfahren zur Herstellung kationischer Hydrazonfarbstoffe der Formel

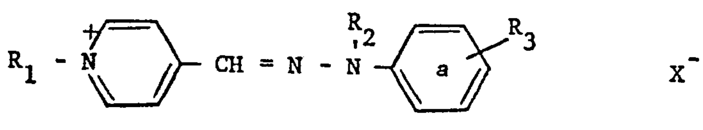

worin

$R_1$ Alkyl, Alkenyl, Aralkyl, Cycloalkyl,

$R_2$ Wasserstoff, Alkyl, Alkenyl, Aryl, Aralkyl, Cycloalkyl oder mit Ring a verbundenes Alkylen,

$R_3$ Wasserstoff oder einen oder mehrere in der Farbstoffchemie übliche nichtionische Substituenten und

$X^-$ ein Anion bedeuten,

worin an Ring a ein aromatischer oder cycloaliphatischer Ring annelliert sein kann, und worin die genannten Reste in der Farbstoffchemie übliche nichtionische Substituenten tragen können, dadurch gekennzeichnet, daß man 4-Methyl-pyridin mit einem Quaternierungsmittel der Formel

$$R_1—X$$

wobei

$R_1$ die oben angegebene Bedeutung hat und

X eine als Anion $X^-$ abspaltbare Gruppe bedeutet,

bei − 20 °C bis zum Siedepunkt des Systems behandelt, das entstehende Reaktionsprodukt mit einer Base und einem Nitrit der Formel

$$R—O—N=O$$

wobei R einen organischen Rest bedeutet, in einem Temperaturbereich von − 20 °C bis + 60 °C umsetzt, anschließend bei einem pH-Wert unterhalb von 7 mit einem Hydrazin der Formel

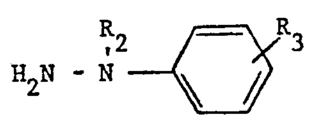

wobei $R_2$ und $R_3$ die oben angegebene Bedeutung haben, oder Hydrazosulfonat der Formel

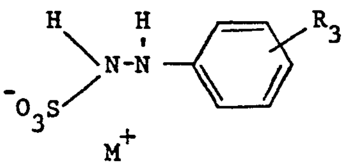

oder

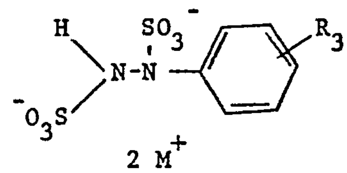

wobei

$M^+$ ein einwertiges Metall- oder organisch substituiertes Ammoniumkation oder ein Äquivalent eines zweiwertigen Kations darstellt, und

$R_3$ die oben angegebene Bedeutung hat,

in einem Temperaturbereich von $-20\,^{\circ}C$ bis zur Siedetemperatur des Systems umsetzt, und gegebenenfalls in einer an sich bekannten Weise mit einer Verbindung der Formel

$$R_2—X$$

worin

X die oben angegebene Bedeutung hat und

$R_2$ Alkyl, Alkenyl oder Aralkyl bedeutet, umsetzt.

2. Verfahren gemäß Anspruch 1 zur Herstellung von Farbstoffen der Formel

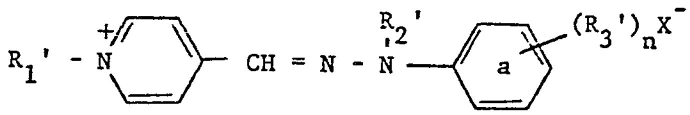

worin

$R_1'$ $C_1$-bis $C_4$-Alkyl, $C_3$- bis $C_4$-Alkenyl, Phenyl-$C_1$- bis $C_3$-alkyl, Cyclopentyl oder Cyclohexyl,

$R_2'$ Wasserstoff, $C_1$- bis $C_4$-Alkyl, $C_3$- bis $C_4$-Alkenyl, Phenyl, Phenyl-$C_1$- bis $C_3$-alkyl, Cyclopentyl, Cyclohexyl oder mit Ring a verbundenes $C_2$- oder $C_3$-Alkylen oder Cyclohexylen,

$R_3'$ $C_1$- bis $C_4$-Alkyl, $C_1$- bis $C_4$-Alkoxy, Hydroxy, Chlor, Brom, Nitro, Amino, Mono- oder Di-$C_1$- bis $C_4$-Alkyl-amino, Aminosulfonyl, Carbonamid, Cyan, Carbonsäure-$C_1$- bis $C_4$-alkylester, Phenylazo oder Methylendioxy,

n 0, 1, 2 oder 3 und

$X^-$ ein Anion bedeuten,

worin die cyclischen und acyclischen durch $C_1$- bis $C_4$-Alkoxy, Hydroxy, Fluor, Chlor, Brom, Amino, Mono- oder Di-$C_1$- bis $C_4$-alkyl-amino, Aminosulfonyl, Carbonamid, Cyan oder Carbonsäure-$C_1$- bis $C_4$-alkylester und die cyclischen Reste außerdem durch $C_1$- bis $C_4$-Alkyl substituiert sein können und an Ring a ein Benzol-, Cyclohexyl- oder Cyclopentylring annelliert sein kann.

3. Verfahren nach Anspruch 1, zur Herstellung von Farbstoffen der Formel des Anspruchs 1, worin

$R_1$ für Methyl, Ethyl oder Benzyl,

$R_2$ für Wasserstoff, Methyl oder 2-Methyl-ethylen und

$R_3$ für Wasserstoff, Methyl, Methoxy, Ethoxy, Chlor, Nitro oder Sulfonamid stehen.

4. Verfahren nach Anspruch 1 zur Herstellung von Farbstoffen der Formel des Anspruchs 1, worin

$R_1$ für Methyl und

$R_2$ und $R_3$ für Wasserstoff stehen.

5. Verfahren nach Anspruch 1, dadurch gekennzeichnet, daß als Base ein Alkali- oder Erdalkalihydroxid, ein organisches Ammoniumhydroxid oder ein Erdalkalioxid verwendet wird.

6. Verfahren nach Anspruch 1 und 5, dadurch gekennzeichnet, daß als Alkalihydroxid Natriumhydroxid oder Kaliumhydroxid eingesetzt wird.

7. Verfahren nach Anspruch 1, dadurch gekennzeichnet, daß der Rest R ein Alkylrest mit 1-5 C-Atomen ist.

8. Verfahren nach Anspruch 7, dadurch gekennzeichnet, daß R gleich Methyl oder Ethyl ist.

9. Verfahren nach Anspruch 1 bis 8, dadurch gekennzeichnet, daß man zwei Reaktionsschritte als Eintopfreaktion durchführt.

10. Verfahren nach Anspruch 1 bis 9, dadurch gekennzeichnet, daß man alle Reaktionsschritte mit Ausnahme der fakultativen letzten Umsetzung als Eintopfverfahren durchführt.

**Claims**

1. Process for the preparation of cationic hydrazone dyestuffs of the formula

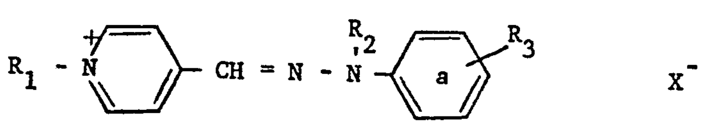

wherein

$R_1$ denotes alkyl, alkenyl, aralkyl or cycloalkyl,

$R_2$ denotes hydrogen, alkyl, alkenyl, aryl, aralkyl or cycloalkyl, or alkylene bonded to the ring a,

$R_3$ denotes hydrogen or one or more non-ionic substituents customary in dyestuff chemistry and

$X^-$ denotes an anion,

wherein an aromatic or cycloaliphatic ring can be fused to the ring a, and wherein the radicals mentioned can carry non-ionic substituents customary in dyestuff chemistry, characterised in that 4-methylpyridine is treated with a quaternising agent of the formula

$$R_1—X$$

wherein

$R_1$ has the abovementioned meaning and

X denotes a group which can be split off in the form of the anion $X^-$,

at − 20 °C up to the boiling point of the system, the resulting reaction product is reacted with a base and a nitrite of the formula

$$R—O—N = O$$

wherein R denotes an organic radical, within a temperature range from − 20 °C to + 60 °C, and the product is then reacted, at a pH value below 7, with a hydrazine of the formula

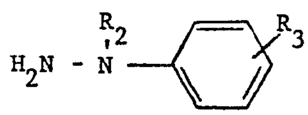

wherein $R_2$ and $R_3$ have the abovementioned meaning, or with a hydrazosulphonate of the formula

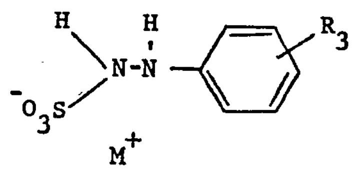

or

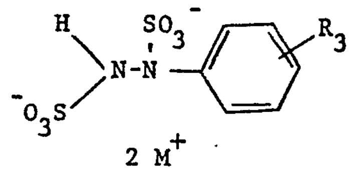

wherein

$M^+$ represents a monovalent metal cation or organically substituted ammonium cation or one equivalent of a divalent cation, and

$R_3$ has the abovementioned meaning,

within a temperature range from − 20 °C up to the boiling point of the system, and, if appropriate, the product is reacted with a compound of the formula

$$R_2—X$$

wherein

X has the abovementioned meaning and

$R_2$ denotes alkyl, alkenyl or aralkyl,

in a manner known per se.

2. Process according to Claim 1 for the preparation of dyestuffs of the formula

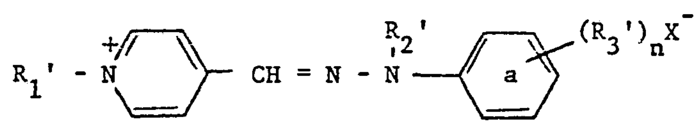

wherein

$R_1'$ denotes $C_1$- to $C_4$-alkyl, $C_3$- to $C_4$-alkenyl, phenyl-$C_1$- to $C_3$-alkyl, cyclopentyl or cyclohexyl,

$R_2'$ denotes hydrogen, $C_1$- to $C_4$-alkyl, $C_3$- to $C_4$-alkenyl, phenyl, phenyl-$C_1$- to $C_3$-alkyl, cyclopentyl or cyclohexyl, or cyclohexylene or $C_2$- or $C_3$-alkylene bonded to the ring a,

$R_3'$ denotes $C_1$- to $C_4$-alkyl, $C_1$- to $C_4$-alkoxy, hydroxyl, chlorine, bromine, nitro, amino, mono- or di-$C_1$- to $C_4$-alkylamino, aminosulphonyl, carboxamide, cyano, a carboxylic acid $C_1$- to $C_4$-alkyl ester, phenylazo or methylenedioxy,

n denotes 0, 1, 2 or 3 and

$X^-$ denotes an anion,

wherein the cyclic and acyclic radicals can be substituted by $C_1$- to $C_4$-alkoxy, hydroxyl, fluorine, chlorine, bromine, amino, mono- or di-$C_1$- to $C_4$-alkylamino, aminosulphonyl, carboxamide, cyano or a carboxylic acid $C_1$- to $C_4$-alkyl ester and the cyclic radicals can additionally be substituted by $C_1$- to $C_4$-alkyl, and a benzene, cyclohexyl or cyclopentyl ring can be fused onto the ring a.

3. Process according to Claim 1 for the preparation of dyestuffs of the formula of Claim 1, wherein

$R_1$ represents methyl, ethyl or benzyl,

$R_2$ represents hydrogen, methyl or 2-methyl-ethylene and

$R_3$ represents hydrogen, methyl, methoxy, ethoxy, chlorine, nitro or sulphonamide.

4. Process according to Claim 1 for the preparation of dyestuffs of the formula of Claim 1, wherein

$R_1$ represents methyl and

$R_2$ and $R_3$ represent hydrogen.

5. Process according to Claim 1, characterised in that the base used is an alkali metal hydroxide, an alkaline earth metal hydroxide, an organic ammonium hydroxide or an alkaline earth metal oxide.

6. Process according to Claim 1 and 5, characterised in that sodium hydroxide or potassium hydroxide is used as an alkali metal hydroxide.

7. Process according to Claim 1, characterised in that the radical R is an alkyl radical having 1-5 C atoms.

8. Process according to Claim 7, characterised in that R is equal to methyl or ethyl.

9. Process according to Claim 1 to 8, characterised in that two reaction steps are carried out as a one-vessel reaction.

10. Process according to Claim 1 to 9, characterised in that all reaction steps, with the exception of the facultative final reaction, are carried out as a one-vessel process.

**Revendications**

1. Procédé de préparation de colorants cationiques d'hydrazone de formule

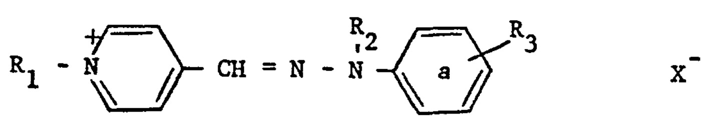

dans laquelle

$R_1$ représente un groupe alkyle, alcényle, aralkyle, cycloalkyle,

$R_2$ représente l'hydrogène, un groupe alkyle, alcényle, aryle, aralkyle, cycloalkyle ou alkylène relié au cycle a,

$R_3$ représente l'hydrogène ou un ou plusieurs substituants non ioniques usuels dans la chimie des colorants et

$X^-$ représente un anion, le cycle a pouvant être condensé avec un cycle aromatique ou cycloaliphatique, et les restes mentionnés pouvant porter les substituants non ioniques usuels dans la chimie des colorants, caractérisé en ce que l'on traite la 4-méthylpyridine par un agent quaternisant de formule

$$R_1—X$$

dans laquelle

$R_1$ a la signification indiquée ci-dessus et

X représente un groupe éliminable à l'état d'anion $X^-$,

à une température allant de $-20$ °C jusqu'au point d'ébullition du système, on fait réagir le produit de réaction obtenu avec une base et un nitrite de formule

$$R—O—N=O$$

dans laquelle R représente un reste organique, dans un intervalle de température de $-20$ à $+60$ °C, on fait réagir ensuite à un pH inférieur à 7 avec une hydrazine de formule

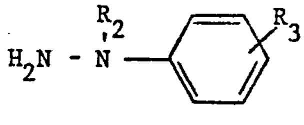

dans laquelle $R_2$ et $R_3$ ont les significations indiquées ci-dessus, ou un hydrazosulfonate de formules

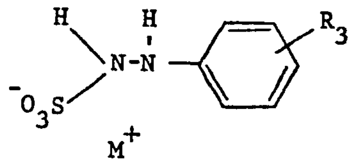

ou

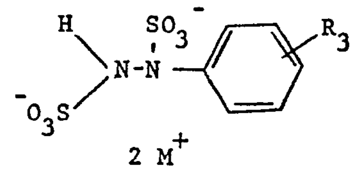

dans lesquelles

$M^+$ représente un cation de métal monovalent ou un cation d'ammonium à substituants organiques ou un équivalent d'un cation divalent, et,

$R_3$ a la signification indiquée ci-dessus,

dans un intervalle de température allant de − 20 °C jusqu'à la température d'ébullition du système, et le cas échéant on fait réagir de manière connue en soi avec un composé de formule

$$R_2—X$$

dans laquelle

X a la signification indiquée ci-dessus et

$R_2$ représente un groupe alkyle, alcényle ou aralkyle.

2. Procédé selon la revendication 1 pour la préparation de colorant de formule

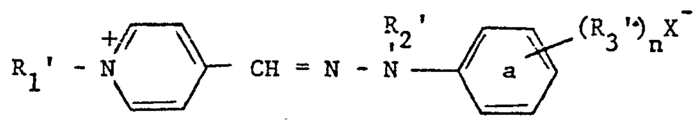

dans laquelle

$R_1'$ représente un groupe alkyle en $C_1$-$C_4$, alcényle en $C_3$-$C_4$, phényl-(alkyle en $C_1$-$C_3$), cyclopentyle ou cyclohexyle,

$R_2'$ représente l'hydrogène, un groupe alkyle en $C_1$-$C_4$, alcényle en $C_3$-$C_4$, phényle, phényl-(alkyle en $C_1$-$C_3$), cyclopentyle, cyclohexyle ou alkylène en $C_2$-$C_3$ relié au cycle a ou cyclohexylène,

$R_3'$ représente un groupe alkyle en $C_1$-$C_4$, alcoxy en $C_1$-$C_4$, hydroxy, le chlore, le brome, un groupe nitro, amino, mono- ou di-(alkyle en $C_1$-$C_4$)-amino, aminosulfonyle, carboxamide, cyano, ester alkylique en $C_1$-$C_4$ d'acide carboxylique, phénylazo ou méthylène-dioxy,

n est égal à 0, 1, 2 ou 3 et

$X^-$ représente un anion,

les restes cycliques et acycliques pouvant être substitués par des groupes alcoxy en $C_1$-$C_4$, hydroxy, le fluor, le chlore, le brome, les groupes amino, mono- ou di-(alkyle en $C_1$-$C_4$)-amino, aminosulfonyle, carboxamide, cyano ou ester alkyliques en $C_1$-$C_4$ d'acide carboxylique, et les restes cycliques en outre par des groupes alkyle en $C_1$-$C_4$, et le cycle a pouvant être condensé avec un cycle benzénique, cyclohexyle ou cyclopentyle.

3. Procédé selon la revendication 1 pour la préparation de colorants répondant à la formule de la revendication 1 dans laquelle

$R_1$ représente un groupe méthyle, éthyle ou benzyle,

$R_2$ représente l'hydrogène, un groupe méthyle ou 2-méthyléthylène et

$R_3$ représente l'hydrogène, un groupe méthyle, méthoxy, éthoxy, le chlore, un groupe nitro ou sulfonamide.

4. Procédé selon la revendication 1 pour la préparation de colorants répondant à la formule de la revendication 1 dans laquelle

$R_1$ représente un groupe méthyle et

$R_2$ et $R_3$ l'hydrogène.

5. Procédé selon la revendication 1, caractérisé en ce que l'on utilise en tant que base un hydroxyde alcalin ou alcalinoterreux, un hydroxyde organique d'ammonium ou un oxyde alcalinoterreux.

6. Procédé selon les revendications 1 et 5, caractérisé en ce que l'on utilise en tant qu'hydroxyde alcalin l'hydroxyde de sodium ou l'hydroxyde de potassium.

7. Procédé selon la revendication 1, caractérisé en ce que le reste R est un reste alkyle en $C_1$-$C_5$.

8. Procédé selon la revendication 7, caractérisé en ce que R représente un groupe méthyle ou éthyle.

9. Procédé selon les revendications 1 à 8, caractérisé en ce que l'on exécute deux stades de réaction sous forme d'une réaction en un seul récipient.

10. Procédé selon les revendications 1 à 9, caractérisé en ce que l'on exécute tous les stades de réaction, à l'exception de la dernière réaction facultative, sous la forme d'une opération dans un seul récipient.